(19) Europäisches Patentamt
European Patent Office
Office européen des brevets

(11) Veröffentlichungsnummer: **0 042 356 A1**

(12) # EUROPÄISCHE PATENTANMELDUNG

(21) Anmeldenummer: **81810230.3**

(22) Anmeldetag: **09.06.81**

(51) Int. Cl.³: **H 01 B 3/42**, F 16 L 59/00, C 08 G 59/42, C 08 G 63/76

(30) Priorität: **13.06.80 CH 4570/80**

(43) Veröffentlichungstag der Anmeldung: **23.12.81 Patentblatt 81/51**

(84) Benannte Vertragsstaaten: **CH DE FR GB LI**

(71) Anmelder: **CIBA-GEIGY AG, Patentabteilung Postfach, CH-4002 Basel (CH)**

(72) Erfinder: **Kreibich, Ursula, Dr., Im Finstern Boden 15, CH-4125 Riehen (CH)**
Erfinder: **Lohse, Friedrich, Prof. Dr., Buchenstrasse 23, CH-4104 Oberwil (CH)**
Erfinder: **Schmid, Rolf, Dr., Weihermattweg 18, CH-4460 Gelterkinden (CH)**

(54) **Verwendung von teilkristallinen Polymeren als Isoliermaterial in der Kryotechnik.**

(57) Teilkristalline vernetzte Polymere, welche eine Schmelzenthalpie von 30 bis 80 $kJ \cdot kg^{-1}$ und miteinander durch Oxycarbonylgruppen verbundene, aus 2 bis 14 Methylengruppen bestehenden Sequenzen aufweisen, werden wegen ihrer guten Flexibilität und Festigkeit bei tiefen Temperaturen in der Kryotechnik als elektrisches und thermisches Isoliermaterial verwendet. Sie können in Form von Behältern, Röhren oder als Bestandteile von Laminaten oder Verbundstoffen eingesetzt werden.

EP 0 042 356 A1

CIBA-GEIGY AG
Basel (Schweiz)

3-12899/+

# Verwendung von teilkristallinen Polymeren als Isoliermaterial in der Kryotechnik

Teilkristalline Polymere, welche Vernetzungsprodukte aus im wesentlichen linearen Polyaddukten von langkettigen Dicarbonsäuren und Polyepoxiden oder von langkettigen Diolen und Polyisocyanaten sind, sind bereits bekannt, z.B. DE-OS 26 18 147 und DE-OS 21 10 457. Wegen ihrer kristallinen Bereiche, die eine schlechte Tieftemperaturflexibilität erwarten lassen, und wegen des starken Anstiegs der Biegungsspannung bei -10°C bis -40°C, welche auf ungenügende Schlagzähigkeit bei Tieftemperaturen hinweist, war nicht zu vermuten, dass solche Produkte bei kryogenen Temperaturen gute physikalische Eigenschaften aufweisen.

Ein Hauptproblem bei der Verwendung von Kunststoffen in der Kryotechnik, d.h. bei Temperaturen von 0 bis etwa 100 K, sind die ungenügende Festigkeit und Flexibilität der Stoffe. Verbesserungsvorschläge sind bekannt, z.B. von I.M. Soffer und R. Molho im J. Macromol. Sci. Phys. B 1 (1967), 709-739: Additionsprodukte auf Basis von Bisphenol A-Epoxidharzen, Dodecenylbernsteinsäureanhydrid und aliphatischer Tricarbonsäure oder auf Basis einer Mischung aus Bisphenol A-Harz, aliphatischem Epoxidharz, Diurethanpräpolymerem und 4,4'-Methylen-bis-(2-chlor-anilin) bewirken eine beschränkte Verbesserung der Festigkeit und Flexibilität.

Ueberraschenderweise wurde nun gefunden, dass bestimmte teilkristalline vernetzte Polymere im kryogenen Temperaturbereich eine hohe Flexibilität und gute Festigkeit aufweisen, die weit höher ist als

bei den schon in der Kryotechnik verwendeten Stoffen.

Die Erfindung betrifft daher die Verwendung von teilkristallinen vernetzten Polymeren, welche eine Schmelzenthalpie von 30-80 $kJ \cdot kg^{-1}$, vorzugsweise von 40 bis 60 $kJ \cdot kg^{-1}$, und aus 2 bis 14 Methylengruppen bestehende Sequenzen, die untereinander mit Oxycarbonylgruppen verbunden sind, aufweisen, als thermisches und elektrisches Isoliermaterial in der Kryotechnik.

Die Polymeren können in Form von Behältern, Röhren oder als Bestandteile von Laminaten oder Verbundstoffen eingesetzt werden.

Man verwendet sie beispielsweise bei der Lagerung oder für den Transport von verflüssigten Gasen, z.B. Erdgas, oder in der Supraleittechnik.

Insbesondere eignen sich Polymere, die Vernetzungsprodukte aus einem kristallinen, aliphatischen Polyester mit einem Molekulargewicht zwischen 1000 und 10'000 und einer Verbindung mit mindestens 3 Epoxidgruppen als Vernetzungsmittel darstellen, wobei der Polyester saure Endgruppen enthält und Segmente der Struktur A

$$-O-\left[\underset{\underset{O}{\|}}{C}-(CH_2)_n-\underset{\underset{O}{\|}}{C}-O-(CH_2)_m-O\right]_x-\underset{\underset{O}{\|}}{C}-(CH_2)_n-\underset{\underset{O}{\|}}{C}-O-$$

worin n eine Zahl von 2 bis 14, m eine Zahl von 2-14, n + m eine Zahl von 7 bis 24 und x eine Zahl von 2 bis 33 bedeuten, aufweist.

Vorzugsweise beträgt das Molekulargewicht des Polyesters 2000 bis 7000, die Summe n + m in der Struktur A 10 bis 16 und x 4 bis 20.

Andere geeignete Polymere sind Vernetzungsprodukte aus einem kristallinen, aliphatischen Polyester mit einem Molekulargewicht zwischen 1000 und 10'000 und einer Verbindung mit mindestens 3 Isocyanatgruppen

als Vernetzungsmittel, wobei der Polyester alkoholische Endgruppen enthält und Segmente der Struktur B

$$-O\left[(CH_2)_m-O-\underset{\underset{O}{\|}}{C}-(CH_2)_n-\underset{\underset{O}{\|}}{C}\right]_y-O-(CH_2)_m-O-$$

worin m eine Zahl von 2 bis 14, n eine Zahl von 2 bis 14, m + n eine Zahl von 7 bis 24 und y eine Zahl von 2 bis 41 bedeuten, aufweist.

Vorzugsweise beträgt das Molekulargewicht des Polyesters 2000 bis 7000, die Summe m + n in der Struktur B 10 bis 16 und y 4 bis 24.

Die kristallinen Polyester können in bekannter Weise hergestellt werden. Grundlegendes über die Herstellung langkettiger, aliphatischer Polyesterdicarbonsäuren können einer Publikation von H. Batzer et al. in "Die Angewandte Makromolekulare Chemie" 1973, Seiten 349-412, entnommen werden. Weitere Angaben sind in der GB-Patentschrift 1 164 584 enthalten. Für die Herstellung von Polyestern mit Hydroxylendgruppen sei auf die GB-Patentschrift 1 301 990 verwiesen.

Bevorzugt werden Polyester mit einem Molekulargewicht von 2000 bis 7000 aus Adipinsäure und Hexandiol, Sebazinsäure und Hexandiol, Dodekandisäure und Hexandiol, Dodekandisäure und Butandiol oder Dodekandisäure und Athylenglykol eingesetzt, insbesondere ein Adipinsäure-Hexandiol-Polyester mit dem Molekulargewicht von 6000.

Den angeführten kristallinen Polyestern mit den Segmenten der Strukturen A oder B können ein weiterer kristalliner Polyester oder ein amorpher aliphatischer Polyester zugefügt werden, bevor sie vernetzt werden, vorzugsweise solche der folgenden Art: Sebazinsäure-Neopentylglykol-Polyester (Molekulargewicht 2000-5000), Dodekandisäure-Nepentylglykol-Polyester (Molekulargewicht 2000-50'000), Polyester aus dimerisierter Fettsäure und Hexandiol (Molekulargewicht 2000-5000) oder Dodekandisäure-Hexandiol-Polyester (kristallin; zusammen mit

einem anderen kristallinen Polyester). Insbesondere geeignet sind Polyester mit einem Molekulargewicht von 2000-3000 aus Sebazinsäure oder Dodekandisäure mit Neopentylglykol. Das Mischungsverhältnis von kristallinen und amorphen Polyestern kann in weiten Grenzen schwanken; das Gewichtsverhältnis kann bis zu 0,3-0,7, vorzugsweise 0,4-0,6, betragen.

Je nachdem, ob Polyester mit Carboxylendgruppen oder solche mit Hydroxylendgruppen verwendet werden sollen, wählt man das Molverhältnis von Dicarbonsäure und Diol. Auf x + 1 Mol Säure setzt man x Mol Diol ein, um ein Produkt mit Carboxylendgruppen, auf y + 1 Mol Diol setzt man y Mol Säure ein, um ein Produkt mit Hydroxylendgruppen zu erhalten. Das Molverhältnis kann beispielsweise 5:4, 11:10 oder 20:19 betragen.

Als Verbindungen mit 3 Epoxidgruppen im Molekül eignen sich insbesondere Triglycidylisocyanurat, Triglycidylisocyanurat, Triglycidylverbindungen, welche eine oder mehrere Hydantoin- und/oder Dihydrouracilgruppen enthalten, Epoxidverbindungen der Formel

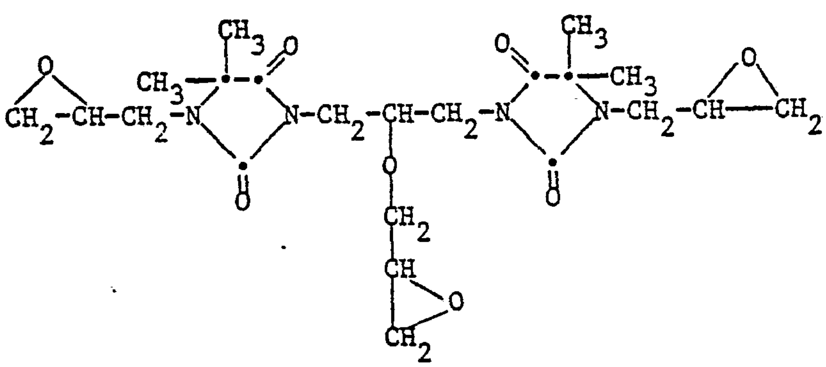

und Epoxid-Phenol-Novolakharze, z.B. solche mit durchschnittlich 3-5 Glycidyloxygruppen im Molekül.

Als Verbindungen mit mindestens 3 Isocyanatgruppen kommen z.B. folgende in Betracht:

Additionsprodukte von 3 Mol Toluylen-2,4-diisocyanat an 1 Mol eines Triols, wie zum Beispiel an 1,1,1-Trimethylol-propan,

a) 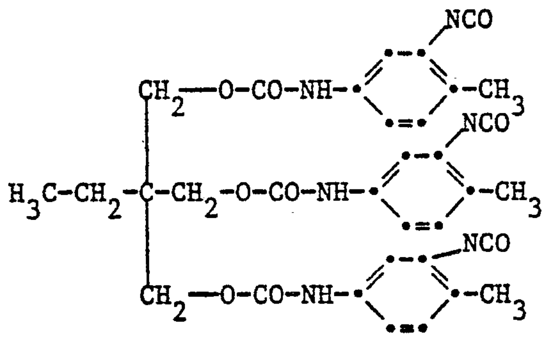

ferner b) Tris-p-isocyanatophenylmethan ("Desmodur R", registrierte Marke der Bayer Leverkusen) und c) ein Triisocyanat aus Hexamethylendiaminodiisocyanat der folgenden Struktur:

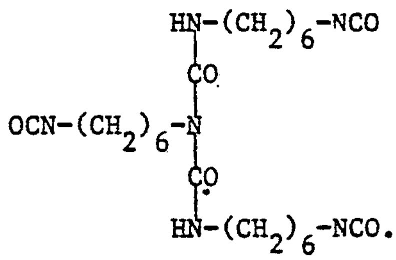

Vorzugsweise werden a), b) oder c) verwendet.

Vorzugsweise verwendet man Polymere, bei deren Herstellung 1 Aequivalent des Härtungsmittels, also der Epoxidverbindung bzw. der Isocyanatverbindung mit 0,7 bis 1,2 Aequivalenten, insbesondere 0,9 bis 1,1 Aequivalenten, des Polyesters oder der Polyester umgesetzt wird. Die Umsetzung erfolgt in bekannter Weise und kann in Lösung oder vorzugsweise in der Schmelze durchgeführt werden, wobei man gewöhnlich zwischen 50 und 200°C während 1 bis 20 Stunden reagieren lässt. Dabei wird das Produkt gleichzeitig zu Giesskörpern, Schaumkörpern, Presslingen, Laminaten und Verbundstoffen geformt. Den Formmassen können übliche Zusätze, wie Füllstoffe, Verstärkungsmittel (Glasfasern), Formtrennmittel, Alterungsschutzmittel, Farbstoffe und Pigmente, oder auch Treibmittel zur Herstellung von Schaumstoffen zugefügt werden.

Zwecks optimaler Ausbildung der Kriatallstruktur kann auch ein Nukleierungsmittel, wie ein Phthalocyanin oder Russ, zugesetzt werden.

Zur Reaktionsbeschleunigung können bekannte Beschleuniger, wie insbesondere 1-Methyl-imidazol oder auch Benzyldimethylamin usw., in Mengen von 0,1 bis 5%, bezogen auf die Reaktionsmischung, zugesetzt werden.

Beispiel 1: 1120 g (1 Aequivalent) eines sauren Polyesters aus 11 Mol Adipinsäure und 10 Mol 1,6-Hexandiol, hergestellt nach dem Schmelzverfahren, werden auf 110°C erwärmt, mit 112 g (1 Aequivalent) Triglycidylisocyanurat und 0,2% N-Methyl-imidazol, bezogen auf das Gesamtgewicht, gut gemischt, evakuiert und in einer zuvor mit Trennmittel behandelten und auf 120°C vorgewärmten Antikorrodalform während 10 h bei 130°C ausgehärtet. Es wird eine in der Wärme gummielastische und nach dem Abkühlen teilkristalline Platte erhalten, welche eine Schmelzenthalpie von 54 $kJ \cdot kg^{-1}$ und einen Schmelzpunkt von 45°C aufweist.

Die Prüfung der Biegefestigkeit nach VSM 77103 ergibt bei 77 K eine Biegefestigkeit von 113,3 $N\ mm^{-2}$, wobei trotz einer Durchbiegung von 20 mm noch kein Bruch eintritt.

Die Schlagbiegefestigkeit, geprüft nach VSM 77105, beträgt bei 77 K 32 $N\ mm^{-1}$, bei 5 K 26 $N\ mm^{-1}$.

Verwendet man anstelle des Triglycidylisocyanurats eine äquivalente Menge eines Epoxid-Phenol-Novolaks mit durchschnittlich 3 Glycidylgruppen pro Molekül, so wird eine Platte mit ähnlichen Eigenschaften erhalten (Schlagbiegefestigkeit bei 77 K 33 $N\ mm^{-1}$).

VSM bedeutet Verein Schweizerischer Maschinenindustrieller.

Beispiel 2: 860 g eines sauren Polyesters aus 20 Mol Dodekandisäure und 19 Mol Hexandiol, hergestellt nach dem Schmelzverfahren und ein

Säureäquivalentgewicht von 3255 g aufweisend, werden auf 110°C erwärmt und mit 860 g eines sauren Polyesters aus 11 Mol Sebazinsäure und 10 Mol Neopentylglykol, hergestellt nach dem Schmelzverfahren und ein Säureäquivalentgewicht von 1170 g aufweisend, vermischt. Zu dieser Menge Polyester (1 Aequivalent) werden 112 g Triglycidylisocyanurat (1 Aequivalent) und, bezogen auf das Gesamtgewicht, 0,2% N-Methylimidazol hinzugefügt. Nach gutem Mischen und Evakuieren wird das Gemisch in einer zuvor mit Trennmittel behandelten und auf 120°C vorgewärmten Antikorrodalform während 6 h bei 140°C ausgehärtet. Man erhält eine in der Wärme gummi-elastische und nach dem Abkühlen teilkristalline Platte, welche eine Schmelzenthalpie von 51 $kJ \cdot kg^{-1}$ und eine Schmelztemperatur von 70°C aufweist.

Die Werte für die Schlagbiegefestigkeit nach VSM 77105 sind bei 77 K 26 $N\ mm^{-1}$ und bei 5 K 22,5 $N\ mm^{-1}$.

Patentansprüche

1. Verwendung von teilkristallinen vernetzten Polymeren, welche eine Schmelzenthalpie von 30 bis 80 $kJ \cdot kg^{-1}$ und aus 2 bis 14 Methylengruppen bestehende Sequenzen, die untereinander mit Oxycarbonylgruppen verbunden sind, aufweisen, als thermisches und elektrisches Isoliermaterial in der Kryotechnik.

2. Verwendung von teilkristallinen vernetzten Polymeren gemäss Patentanspruch 1, dadurch gekennzeichnet, dass die Schmelzenthalpie von 40 bis 60 $kJ \cdot kg^{-1}$ beträgt.

3. Verwendung gemäss Patentanspruch 1, dadurch gekennzeichnet, dass man die Polymeren in Form von Behältern, Röhren oder als Bestandteile von Laminaten oder Verbundstoffen einsetzt.

4. Verwendung gemäss Patentanspruch 1, dadurch gekennzeichnet, dass man als Polymer ein Vernetzungsprodukt aus einem kristallinen, aliphatischen Polyester mit einem Molekulargewicht zwischen 1000 und 10'000, enthaltend Segmente der Struktur A

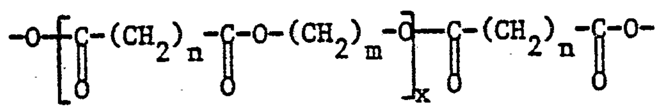

worin n = 2-14, m = 2-14, n + m = 7-24 und x = 2-33 bedeuten, und saure Endgruppen, und einer Verbindung mit mindestens 3 Epoxidgruppen als Vernetzungsmittel einsetzt.

5. Verwendung gemäss Patentanspruch 4, dadurch gekennzeichnet, dass man als Polymer ein Vernetzungsprodukt auf Basis eines Polyesters mit einem Molekulargewicht zwischen 2000 und 7000 enthaltend Segmente der Struktur A, worin n + m = 10-16 und x 4-20 bedeuten, einsetzt.

6. Verwendung gemäss Patentanspruch 1, dadurch gekennzeichnet, dass man als Polymer ein Vernetzungsprodukt aus einem kristallinen, aliphatischen Polyester mit einem Molekulargewicht zwischen 1000 und 10'000, enthaltend Segmente der Struktur B

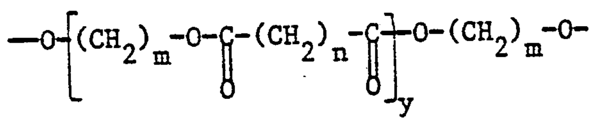

worin m = 2-14, n = 2-14, m + n = 7-24 und y = 2-41 bedeuten, und alkoholische Endgruppen, und einer Verbindung mit mindestens 3 Isocyanatgruppen als Vernetzungsmittel einsetzt.

7. Verwendung gemäss Patentanspruch 6, dadurch gekennzeichnet, dass man als Polymer ein Vernetzungsprodukt auf Basis eines Polyesters mit einem Molekulargewicht zwischen 2000 und 7000, enthaltend Segmente der Struktur B, worin m + n = 10-16 und y = 4-24 bedeuten, einsetzt.

8. Verwendung gemäss Patentanspruch 4 oder 6, dadurch gekennzeichnet, dass man als Polymer ein Vernetzungsprodukt einsetzt, das aus dem kristallinen Polyester, dem Härtungsmittel und entweder einem zweiten kristallinen Polyester oder einem amorphen aliphatischen Polyester gebildet wird.

Europäisches Patentamt

# EUROPÄISCHER RECHERCHENBERICHT

0042356

Nummer der Anmeldung

EP 81810230.3

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A1 - 2 618 107 (CIBA-GEIGY)<br>+ Ansprüche 1-9,11,12,14; Seite 1, Absatz 2 - Seite 2 +<br>-- | 1-5,8 | H 01 B 3/42<br>F 16 L 59/00<br>C 08 G 59/42<br>C 08 G 63/76 |
| A | US - A - 3 397 720 (JONES)<br>+ Spalte 2, Zeile 43 - Spalte 3, Zeile 10 +<br>---- | 1 | |

RECHERCHIERTE SACHGEBIETE (Int. Cl.³)

H 01 B 3/00
H 01 B 7/00
H 01 B 12/00
F 16 L 53/00
F 16 L 58/00
F 16 L 59/00
C 08 G 59/00
C 08 G 63/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 03-09-1981 | KUTZELNIGG |

EPA form 1503.1 06.78